Europäisches Patentamt

(19) European Patent Office

Office européen des brevets

(11) Publication number : **0 445 993 A2**

## (12) EUROPEAN PATENT APPLICATION

(21) Application number : **91301744.8**

(22) Date of filing : **01.03.91**

(51) Int. Cl.$^5$ : **H04N 3/36, H04N 5/82**

(30) Priority : **03.03.90 GB 9004824**

(43) Date of publication of application :
**11.09.91 Bulletin 91/37**

(84) Designated Contracting States :
**AT BE CH DE DK ES FR GB GR IT LI LU NL SE**

(71) Applicant : **THAMES TELEVISION PLC**
**306-316 Euston Road**
**London NW1 3BB (GB)**

(72) Inventor : **Emmett, John Robert**
**36 Acacia Road**
**Hampton, Middlesex TW12 3DS (GB)**

(74) Representative : **Sorenti, Gino et al**
**THORN EMI Patents Limited, Central**
**Research Laboratories, Dawley Road**
**Hayes, Middlesex UB3 1HH (GB)**

(54) Reproduction of video signals.

(57) Apparatus for the reproduction of video signals via an intermediate cine film includes a video signal source (1) and a marker generator (5) for marking the video signals. The marked signals are raecorded via a film recorder (9) onto a cine film (11) for archiving. Regeneration of the original video signal from the cine film (11) includes removing the marking from the film (11) using a scanner (33), a marker detector (39) and comparator (46) in order to provide unmarked signals for further broadcast, or the like.

EP 0 445 993 A2

# REPRODUCTION OF VIDEO SIGNALS

This invention relates to methods and apparatus for the reproduction of video signals. In particular the invention relates to such reproduction methods and apparatus in which the information carried on the video signal is is transferred to a cine film, for example, for use in an archiving system.

As the number of types and formats of recording media increases, it is becoming increasingly important to archive such media in a format which ensures the continuing availability of equipment to playback the media. The use of cine film to store the information carried on a video signal recording has been proposed, the information stored on the cine film then being converted back into video signal format at a suitable time. Such situations suffer the problem of film image "wandering" in the projector or telecinegate which is used to create the cine film from the original video signal, thus producing a corresponding wander of the image in each frame of the cine film. In cinemas, the dark surroundings and the large angle subtended by the image of the film at the viewers' eyes, tends to make this wandering insignificant. When the information on the cine film is subsequently transferred back into a video signal, and viewed via a television, the wander is evident to the viewer because of the presence of reference points close to the relatively small television screen.

In West German Patent Specification DE 3614611, there are described a process and apparatus for the reduction of wander of the film image on a cine film. In the process described in this patent specification two sets of markers are printed on the cine film, coarse horizontal markers being printed between frames of the film, and fine vertical markers being printed down one edge of each frame. These are recognised by a film scanner to provide both a coarse mechanical correction, and a fine electronic time base correction to the vertical position of the image in each frame. Such a process suffers the disadvantages, however, that the markers must be separately inserted onto the film. Furthermore, horizontal non-linearities in the film are not corrected for.

It is an object of the present invention to provide a method and apparatus for the reproduction of video signals via an intermediate cine film wherein the problem of film image "wandering" is reduced, but wherein the disadvantages inherent in the prior art system are at least alleviated.

According to a first aspect of the present invention, an apparatus for the reproduction of video signals via an intermediate cine film comprises: marking means for incorporating marker signals at predetermined intervals in a video signal, the intervals being proportional of the line and field scan times of the video signal; recording means for producing a cine film comprising a series of image areas, each area being representative of a frame of the video signal and incorporating patterns representative of the marker signals; and scanning means for the cine film to produce a further video signal, the scanning means incorporating clock means effective to synchronise the further video signal with the marker signals.

The patterns may take the form of dots, or alternatively lines.

Preferably there are a plurality of marker signals provided during each line scan time. There are suitably marker signals provided at the beginning and the end of each frame where the video system used to record the video signal has a sequential scanning system. Alternatively, where the video system used to record the video signal has an inter-laced scanning system, marker signals are repeated during each field.

The first aspect of the invention also provides for a method of reproducing video signals via an intermediate cine film.

According to a second aspect of the present invention, an apparatus for producing a cine film which stores data representative of information carried on a video signal comprises: marking means for incorporating marker signals at predetermined intervals in the video signal, the intervals being proportional to the line and field scan times; and recording means for producing a cine film comprising a series of image areas, each area being representative of a frame of the video signal, and incorporating patterns representative of the marker signals.

The second aspect of the invention also provides for a method of producing a cine film which stores information representative of information carried on a cine film.

According to a third aspect of the present invention, an apparatus for producing a video signal which carries data representative of the information carried on a cine film, the cine film incorporating patterns representative of time marker signals, the apparatus comprising: scanning means for scanning the cine film to produce the video signal, the scanning means incorporating clock means effective to synchronise the video signal with further timing signals representative of the time marker signals.

The third aspect of the invention also provides for a method of producing a video signal which carries information representative of the information carried on a cine film, the cine film incorporating patterns representative of time marker signals.

One particular method for the reproduction of video signals via an intermediate cine film, together with apparatus for performing the method will now be described by way of example only with reference to the accompanying figures in which:

Figure 1 illustrates a recording apparatus for producing a cine film carrying information representative of the information carried on a video signal;

Figure 2 illustrates the video signal horizontal line waveform, with line marker signals incorporated;

Figure 3 illustrates the video signal vertical waveform, with field marker signals incorporated; and

Figure 4 illustrates an apparatus for correcting the film image wandering in the cine film produced using the apparatus of Figure 1.

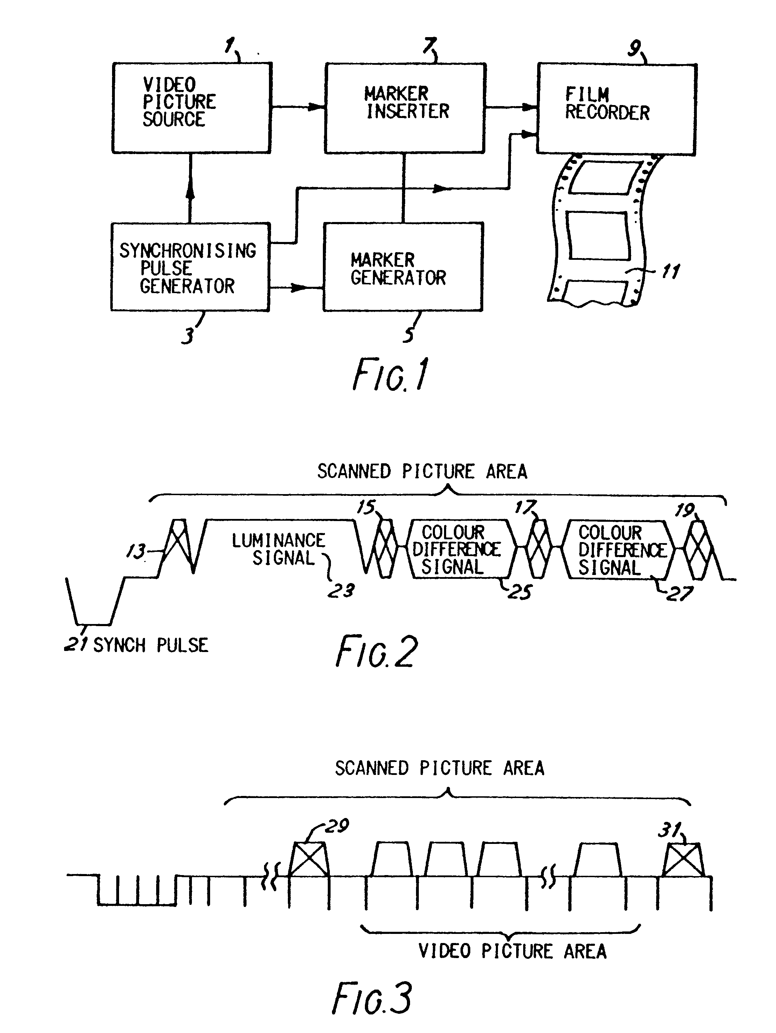

Referring firstly to Figure 1, the recording arrangement includes a video picture source 1, for example, the output from a solid state camera, the source being clocked by a synchronising pulse generator 3. The synchronising pulse generator 3, also provides clock pulses to a marker signal generator 5. The outputs of the video picture source 1, and marker signal generator 5, are both fed into a marker signal inserter 7. The marker signal inserter 7 is effective to produce an encoded video signal with inserted marker signal of the form shown in Figures 2 and 3 as will be described in more detail hereafter. This encoded video signal is fed into a film recorder 9, which is also clocked by pulses from the pulse generator 3. The film recorder 9, is effective to produce a black and white cine film output 11, each frame of the film representing a portion of the video signal encoded with the markers together with information relating to the luminance and chromatic content of the image represented by the particular portion of the video signal. The film recorder 9 is time base gated by pulses from the synchronising pulse generator 3, such that each frame of the cine film 11 includes a precise number of patterns, in the form of dots or lines representative of the marker signals in the encoded video signal.

The audio signal associated with the video signal is recorded separately, synchronisation pulses for the audio recording system (not shown) suitably being produced by the pulse generator 3. The cine film as thus produced may then be stored in a suitable archive.

Referring now particularly to Figure 2, the portions of the encoded video signal corresponding to the horizontal or line waveform of each scanned picture area which in turn corresponds to a frame of the cine film 11 each include four markers, 13, 15, 17, 19 at predetermined time intervals along the waveform. Also included in the waveform are an initial synchronising pulse 21, the conventional luminacity signal 23 and first and second colour difference signals 25, 27. As shown in Figure 3, the vertical, or field waveform for each scanned picture area incorporated in successive frames of the cine film 11 comprises first and second marker lines 29, 31 at either side of the signal corresponding to a frame of the cine film. The marker signals 13, 15, 17, 19, 29, 31 may suitably take the form of sine or square wave "bursts" of known frequency so as to produce a low level "grating" in the images carried by the cine film. Alternatively the marker signals may take form of signals effective to produce black to white transitions in the images carried by the cine film.

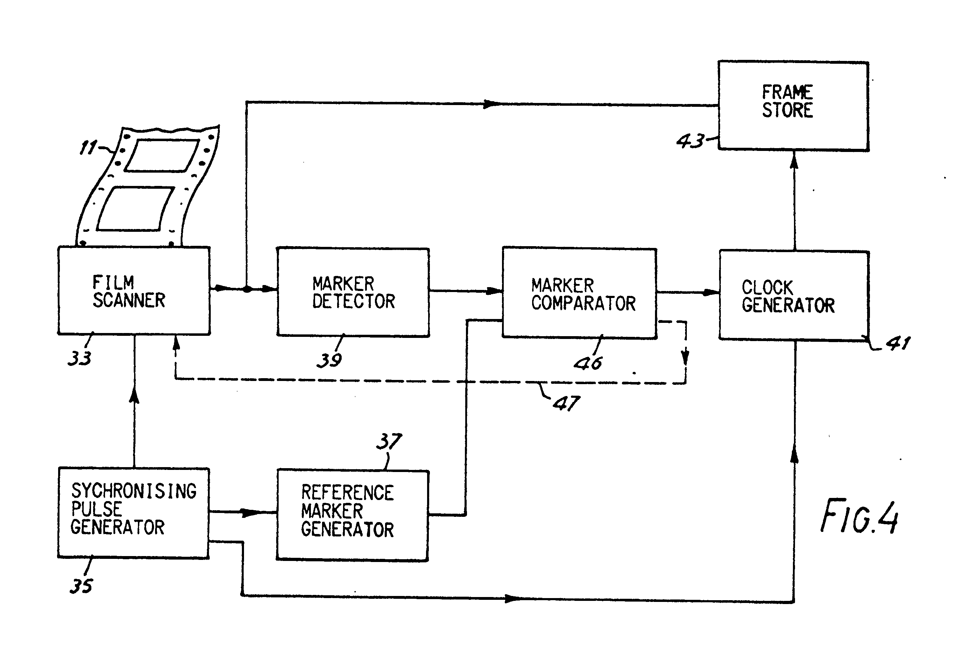

Referring now to Figure 4, when it is required to convert the information stored on the cine film 11 back into a video signal format so, for example, as to enable the signal to be transmitted over a television system, the film 11 is input into a film scanner 33 of the type generally known as a telecine. A synchronising pulse generator 35 provides synchronisation pulses to the scanner 33, to a reference marker generator 37, and a clock generator 41. The film scanner 33 produces a video signal representative of the information carried on the cine film 11, this video signal thus carrying signals representative of the marker signals inserted by marker inserter 7. This video signal is then divided between the marker detection unit 39 and a picture frame store 43. The marker detection unit 39 recovers the signals representative of the marker signals carried by the video signal by windowing and pattern matching techniques. These recovered marker signals are fed into a marker comparator 46, the marker comparator comparing the recovered marker signals with signals produced by the reference marker generator 37 as it is clocked by the synchronising pulse generator 35. Signals representative of the difference in timing of the recorded marker signals and the reference signals are thus produced by the marker comparator. The signals produced by the marker comparator 46 is input into the clock generator 41, the clock generator being responsive to these signals to provide clocking signals for the frame store 43. The frame store 43 is thus clocked at a rate representative of the timing of the recovered marker signals. The output of the picture frame store 43 thus provides a corrected video output which has improved positioning and linearity compared to the video signal output of the film scanner 33.

It will be appreciated that the monitoring of the line markers 13, 15, 17, 19 in the video waveform of Figure 2 enable the correction of the horizontal wander of the frames in the cine film whilst the vertical or field waveform markers 29, 31 do the same for the vertical wander. It will also be appreciated that the intermediate horizontal markers 15, 17 allow for horizontal linearity correction as well as picture position correction, thus taking account of any cine film expansion or shrinkage.

It will also be appreciated that where the video systems are inter-laced video systems, rather than sequential systems, the marker lines 29, 31 will be repeated on each field.

A variation of the apparatus shown in Figure 4 is indicated by the dotted line 47 which represents a link between the output of the marker comparator 46 and the film scanner 33. Thus signals representative of the timing of the recovered marker signals may be used to vary the scanning position and linearity in the film scanner 33.

It will also be appreciated that any video signals possess a line and field scan time and also is divided into frames. These will vary dependent upon the video signal under consideration.

## Claims

1. An apparatus for the reproduction of video signals via an intermediate cine film comprises:

    marking means for incorporating marker signals at predetermined intervals in a video signal, the intervals being proportional of the line and field scan times of the video signal;

    recording means for producing a cine film comprising a series of image areas, each area being representative of a frame of the video signal and incorporating patterns representative of the marker signals;

    and scanning means for scanning the cine film to produce a further video signal, the scanning means incorporating clock means effective to synchronise the further video signal with the marker signals.

2. An apparatus according to claim 1 wherein a plurality of marker signals are provided during each line scan time.

3. An apparatus according to claim 1 or claim 2 wherein recording of the video signals utilises a sequential scanning system, and the marker signals are provided at the beginning and the end of each frame time.

4. An apparatus according to claim 1 or claim 2 wherein recording of the video signals utilises an interlaced scanning system, and the marker signals are repeated during each field scan time.

5. An apparatus according to any one of the preceding claims wherein the patterns representative of the marker signals are in the form of dots.

6. An apparatus according to any one of claims 1-4 wherein the patterns representative of the marker signals are in the form of lines.

7. An apparatus for producing a cine film which stores data representative of information carried on a video signal comprising:

    marking means for incorporating marker signals at predetermined intervals in the video signal, the intervals being proportional to the line and field scan times;

    and recording means for producing a cine film comprising a series of image areas, each area being representative of a frame of the video signal, and incorporating patterns representative of the marker signals.

8. An apparatus for producing a video signal which carries data representative of the information carried on a cine film, the cine film incorporating patterns representative of time marker signals, the apparatus comprising:

    scanning means for scanning the cine film to produce the video signal, the scanning means incorporating clock means effective to synchronise the video signal with further timing signals representative of the time marker signals.

9. A method for reproduction of video signals via an intermediate cine film comprises:

    marking a video signal with marker signals at predetermined intervals in the video signal, the intervals being proportional of the line and field scan times of the video signal;

    producing a cine film comprising a series of image areas, each area being representative of a frame of the video signal and incorporating patterns representative of the marker signals;

    and scanning the cine film to produce a further video signal, the scanning including clocking the video signal so as to synchronise the video signal with the marker signals.

10. A method for producing a cine film which stores data representative of information carried on a video signal comprising:

    marking a video signal with marker signals at predetermined intervals in the video signal, the intervals being proportional to the line and field scan times of the video signal;

    producing a cine film comprising a series of image areas, each area being representative of a frame of the video signal, and incorporating patterns representative of the marker signals.

11. A method for producing a video signal which carries data representative of the information carried on a cine film, the cine film incorporating patterns representative of time marker signals, the method comprising:

    scanning the cine film to produce the video signal, the scanning including clocking the video signal so as to synchronise the video signal with further timing signals representative of the time marker signals.

*FIG.1*

SCANNED PICTURE AREA

*FIG.2*

SCANNED PICTURE AREA

VIDEO PICTURE AREA

*FIG.3*

FIG.4